# EUROPEAN PATENT APPLICATION

(11) **EP 1 837 579 A2**
(43) Date of publication of application: **26.09.2007**
(21) Application number: 07103044.9
(22) Date of filing: 26.02.2007
(51) Int. Cl.: F16L 33/08, F16L 33/02

(54) **Tube with pre-assembled clamping band**

(30) Priority: 01.03.2006 IT TO20060150
(71) Applicant: Trelleborg Automotive Italia s.p.a., 10073 Cirie' TO (IT)
(72) Inventor: Gianotti, Andrea, I-10073, CIRIE' (Torino) (IT)
(74) Representative: Quinterno, Giuseppe

(57) **Abstract**

On one end (1a) of which a clamping band (2) is pre-assembled by means of a connecting structure (4) having a plurality of engaging formations (8) which engage in corresponding seats (9) provided in the wall of the tube (1) in the vicinity of the terminal edge of said end (1a).

The connecting structure (4) comprises a pair of flexible annular parts (5, 6) which are arranged alongside each other and can be fitted around the tube (1) and between which the clamping band (2) is arranged. The annular parts (5, 6) are interconnected by transverse parts (7) so that they are situated at a mutual distance greater than the width of the clamping band (2). At least one of the annular parts (5, 6) is provided with pins (8) which are directed radially inwards and which engage in corresponding holes (9) provided in the wall of said end (1a) of the tube (1).

## Description

The present invention relates to a tube with a pre-assembled clamping band, in particular for use in a water cooling circuit for the internal combustion engine of a motor vehicle and/or in a circuit for supplying air to such a engine.

More specifically, the invention relates to a tube on one end of which a clamping band is pre-assembled by means of a connecting structure having a plurality of engaging formations which engage in corresponding seats provided in the tube wall in the vicinity of the terminal edge of said end.

A tube of this type is known, for example, from the European patent EP-1 526 317 A. This known solution employs a connecting structure which has essentially the shape of a C, with a plurality of engaging formations in the form of hooks which engage in corresponding recesses provided in the inner surface of the tube and extending from the terminal edge of the tube.

This known solution requires the provision of seats with a complex shape in the end of the tube and in particular external projections able to prevent removal of the connecting structure and the associated clamping band pre-assembled on the tube.

One object of the present invention is to propose an improved solution which is simple and inexpensive to produce and which is operationally reliable.

These and other objects are achieved according to the invention with a tube of the type specified above, characterized in that the connecting structure comprises a pair of flexible annular parts which are arranged alongside each other and are adapted to be fitted around the tube and between which the clamping band is arranged, said flexible annular parts being interconnected at a mutual distance greater than the width of the clamping band by transverse parts; at least one of the said annular parts being provided with pins which are directed radially inwards and which engage in corresponding holes provided in the wall of said end of the tube.

In one embodiment the annular parts of the connecting structure have a wavy configuration with first and second circumferential portions which, relative to the axis of the tube, extend at a greater and smaller distance, respectively, than the band.

Conveniently, the abovementioned pins are formed in some of said second circumferential portions of at least one of said annular parts.

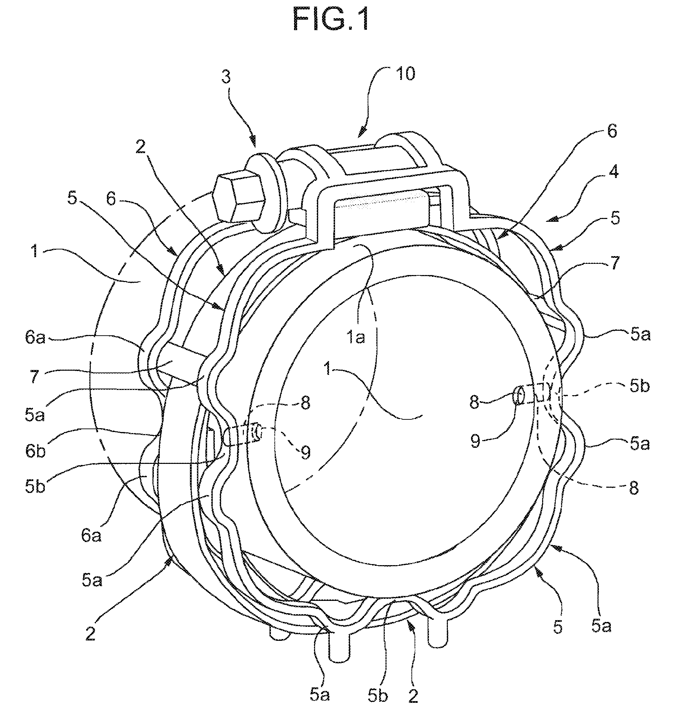

Further characteristic features and advantages of the invention will emerge from the detailed description which follows, provided purely by way of a non-limiting example, with reference to the accompanying drawing which is a perspective view of a terminal portion of a tube with pre-assembled clamping band according to the present invention.

In the drawing, 1 denotes a tube, in particular a hose, which can be used in, for example, a water cooling circuit for the internal combustion engine of a motor vehicle.

A clamping band which is denoted overall by 2 is pre-assembled on one end la of the tube, which is intended to be fitted onto a union or other connecting part of a (for example) radiator. This band is of the type known per se and comprises a screw-type tightening device 3.

The clamping band 2 is pre-assembled on the end la of the tube 1 by means of a connecting structure which is denoted overall by 4. This structure comprises a pair of flexible annular parts 5, 6 which are arranged alongside each other and fitted around the tube 1. The annular parts 5, 6 are interconnected by a plurality of cross-pieces 7 and the mutual distance between these annular parts is greater than the width of the clamping band 2.

Conveniently, the annular parts 5 and 6 have a wavy configuration, with a plurality of first circumferential portions 5a, 6a and with a plurality of second circumferential portions 5b, 6b which, relative to the longitudinal axis of the tube 1, extend at a greater and smaller distance, respectively, than the mean radius of the clamping band 2.

At least one of the abovementioned annular parts 1 is provided with at least one pair of pins 8 which are directed radially inwards and which engage in corresponding holes 9 which are preferably of the through-type and provided in the wall of the end 1a of the tube 1.

Preferably the pins 8 are formed in circumferential portions 5b (and/or 6b) of the rings 5 (6) adjacent to the outer surface of the tube 1.

As can be seen in the upper part of the drawing, conveniently the annular parts 5 and 6 of the connecting structure 4 define a retaining zone 10 which is able to house and retain the screw-type tightening device 3.

The connecting structure 4 may be made of metallic material or, preferably, integrally of moulded plastic.

Engagement beforehand of the band inside the connecting structure 4 is extremely easy. After said engagement, the assembly formed by the clamping band 2 and by the connecting structure 4 may be fitted onto the end la of a tube 1, until the retaining pins 8 engage inside the corresponding holes provided in the tube 1.

Obviously, without modifying the principle of the invention, the embodiments and the constructional details may be widely varied with respect to that described and illustrated purely by way of a non-limiting example, without thereby departing from the scope of the invention as defined in the accompanying claims.

## Claims

1. Tube (1), in particular for a water cooling circuit for the internal combustion engine of a motor vehicle, on one end (1a) of which a clamping band (2) is pre-assembled by means of a connecting structure (4) having a plurality of engaging formations (8) which engage in corresponding seats (9) provided in the wall of the tube (1) in the vicinity of the terminal edge of said end (1a);
**characterized in that** the connecting structure (4) comprises a pair of flexible annular parts (5, 6) which are arranged alongside each other and are adapted to be fitted around the tube (1) and between which the clamping band (2) is arranged, said annular parts (5, 6) being interconnected by transverse parts (7) so that these annular parts are situated at a mutual distance greater than the width of the clamping band (2); at least one of said annular bands (5, 6) being provided with pins (8) which are directed radially inwards and which engage in corresponding holes (9) provided in the wall of said end (1a) of the tube (1).

2. Tube according to Claim 1, in which said annular parts (5, 6) of the connecting structure (4) have a wavy configuration, with first circumferential portions (5a, 6a) and with second circumferential portions (5b, 6b) which, relative to the axis of the tube (1), extend at a greater and smaller distance, respectively, than the clamping band (2).

3. Tube according to Claim 2, in which the abovementioned pins (8) are formed in some of said second circumferential portions (5b, 6b) of at least one of said annular parts (5, 6).

4. Tube according to any one of the preceding claims, in which said holes (9) are through-holes.

5. Tube according to any one of the preceding claims, in which the clamping band (2) has a screw-type tightening device (3), and the annular parts (5, 6) of the connecting structure (4) define a retaining zone (10) able to house and retain said screw-type tightening device (3).

6. Tube according to any one of the preceding claims, in which the connecting structure (4) is made integrally of moulded plastic.
